# EUROPEAN PATENT APPLICATION

(11) **EP 4 779 756 A1**
(43) Date of publication of application: **22.07.2026**
(21) Application number: 24953253.2
(22) Date of filing: 13.12.2024
(51) Int. Cl.: H01M 10/613

(54) **TWO-PHASE IMMERSION LIQUID-COOLED BATTERY PACK**

(30) Priority: 26.11.2024 CN 202422901829 U; 26.11.2024 CN 202411708927
(71) Applicant: Eve Energy Storage Co., Ltd, Wuhan, Hubei 430074 (CN)
(72) Inventor: YU, Zhonghui, Wuhan, Hubei 430074 (CN); XIE, Weikang, Wuhan, Hubei 430074 (CN); ZHONG, Xiuwen, Wuhan, Hubei 430074 (CN); FENG, Chaojun, Wuhan, Hubei 430074 (CN); GONG, Muhong, Wuhan, Hubei 430074 (CN); ZHU, Yuan, Wuhan, Hubei 430074 (CN)
(74) Representative: Zhu, Puxing
(86) International application number: PCT/CN2024/139022
(87) International publication number: WO 2026/113069

(57) **Abstract**

Provided is a two-phase immersion liquid-cooled battery pack including a case, cells, and buffer assemblies. The case is provided with a cavity, and the cavity is configured to be filled with immersion liquid. The cells are provided in the cavity at intervals. The buffer assemblies are provided among the cells. The buffer assembly includes a buffer member and spacer(s). The buffer member is connected to a side of the cell. The spacer(s) are disposed on a side of the buffer member remote from the cell to form a passage between the buffer members. The passage is configured to contain the immersion liquid.

## Description

This application claims priority to Chinese Patent Application No. 2024117089270 filed on November 26, 2024, the disclosure of which is incorporated herein by reference in its entirety.

### TECHNICAL FIELD

The present application relates to the technical field of batteries, and more particularly, to a two-phase immersion liquid-cooled battery pack.

### BACKGROUND

Currently, liquid cooling systems based on lithium batteries mostly adopt indirect liquid cooling technology, and the immersion liquid cooling technology is seldom studied.

### SUMMARY

### TECHNICAL PROBLEM

In an immersion liquid cooling system, the material between the cells, as well as the shape design of the cells, are consistent with that in an indirect liquid cooling system, with two pieces of strip foam material placed. In this case, the immersion liquid is not evenly distributed between the cells, and the heat dissipation effect of the cells is affected.

### TECHNICAL SOLUTION

According to a first aspect, the present application provides a two-phase immersion liquid-cooled battery pack including a case, a plurality of cells, and a plurality of buffer assemblies, where the case is provided with a cavity, and the cavity is configured to be filled with immersion liquid; the plurality of cells spaced apart in the cavity; the plurality of buffer assemblies are disposed among the cells, where each of the buffer assemblies includes a buffer member and one or more spacers, the buffer member is connected to a side of a corresponding one of the plurality of cells, the one or more spacers are disposed on a side of the buffer member remote from the cell to form a passage between the buffer member and another buffer member, and the passage is configured to contain the immersion liquid.

### BENEFICIAL EFFECT

An advantageous effect of the present application is as follows. The cells and buffer assemblies are arranged alternately in sequence, and the buffer assembly is provided with a buffer member connected to a side surface of the cell, so as to achieve a buffering effect. Spacer(s) are provided between the buffer members, a passage is formed between the buffer members, and the immersion liquid can be contained in the passage. In this way, the immersion liquid is filled between the cells, so that distribution of the immersion liquid is more uniform, heat generated by the cells is adsorbed, and a heat dissipation effect is improved, so as to reduce a temperature of each cell.

### BRIEF DESCRIPTION OF THE DRAWINGS

FIG. 1 is a schematic structural diagram of a two-phase immersion liquid-cooled battery pack according to embodiments of the present application;
FIG. 2 is a schematic cross-sectional view of cells and buffer assemblies fitted together according to embodiments of the present application;
FIG. 3 is a partially enlarged schematic view of a region A in FIG. 2 according to embodiments of the present application;
FIG. 4 is a schematic structural diagram of a cell and a buffer assembly fitted together according to embodiments of the present application;
FIG. 5 is a schematic structural diagram of a spacer of FIG. 4 according to embodiments of the present application;
FIG. 6 is a schematic structural diagram of a cell and a buffer assembly fitted together according to embodiments of the present application;
FIG. 7 is a schematic structural diagram of a spacer of FIG. 6 according to embodiments of the present application;
FIG. 8 is a schematic cross-sectional view of a cell and a buffer assembly fitted together according to embodiments of the present application; and
FIG. 9 is a partially enlarged schematic view of a region B in FIG. 8 according to embodiments of the present application.

### Reference signs:

case 20; first end portion 21; second end portion 23; first liquid inlet 25, and first liquid outlet 27;
cell 30, buffer assembly 10, buffer member 12, through hole 122, spacer 14, through-groove 142, micropore 144, liquid cooling plate 40, third end portion 41, fourth end portion 43, and second liquid inlet 45; and
second liquid outlet 47.

### DETAILED DESCRIPTION

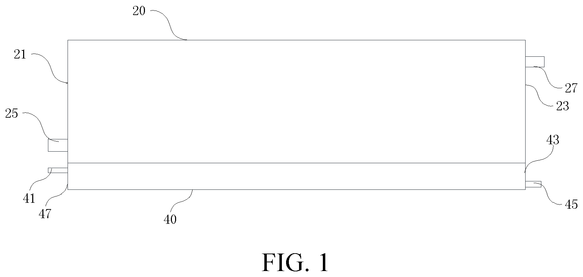

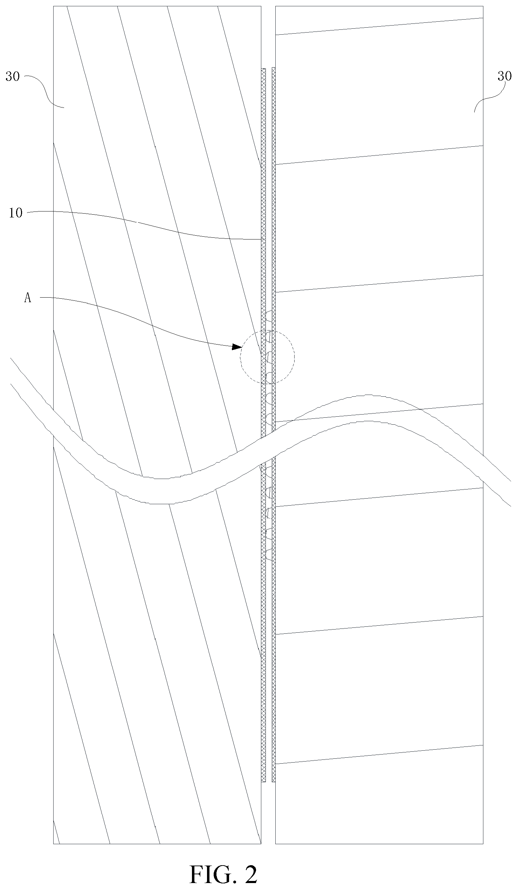

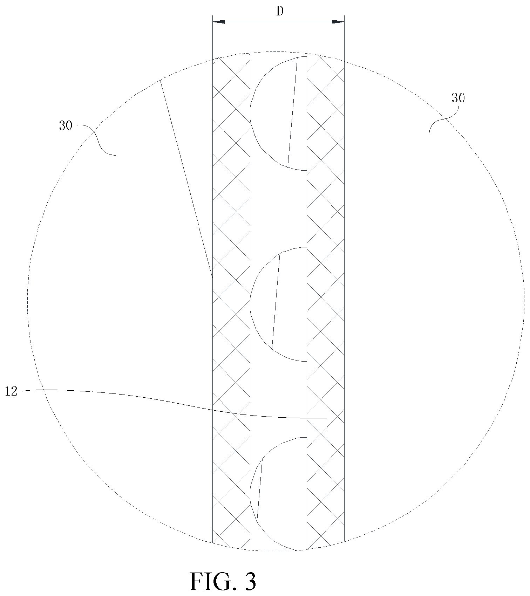

Referring to FIGS. 1 to 3, FIG. 1 is a schematic structural diagram of a two-phase immersion liquid-cooled battery pack according to embodiments of the present application, FIG. 2 is a schematic cross-sectional view of cells 30 and buffer assemblies 10 fitted together according to embodiments of the present application, and FIG. 3 is a partially enlarged schematic view of a region A in FIG. 2 according to embodiments of the present application.

The present application provides a two-phase immersion liquid-cooled battery pack including a case 20, a plurality of cells 30, and a plurality of buffer assemblies 10. The case 20 is provided with a cavity. The cavity is configured to be filled with immersion liquid. The immersion liquid may be a fluorinated liquid, a silicone liquid, or the like. The immersion liquid has a heat-conducting and insulating effect. The cell 30 may store electric energy. The cell 30 may be a lithium battery, a sodium battery, a battery, or the like. The plurality of cells 30 are provided in the cavity at intervals, and the cells 30 generate heat during operation.

The multiple buffer assemblies 10 are provided among the cells 30, and the buffer assemblies 10 are elastic and thus have the effect of buffering and damping. The buffer assembly 10 includes a buffer member 12 and spacer(s) 14. The buffer member 12 is connected to a side of the cell 30. When the cells 30 are arranged in a thickness direction, the buffer member 12 is connected to a largest side of the cell 30. When the cells 30 are arranged in a width direction, the buffer member 12 is connected to a smallest side of the cell 30. The spacer(s) 14 are provided on a side of the buffer member 12 remote from the cell 30 to form a passage between the buffer members 12. The passage is provided to contain the immersion liquid, and the buffer members 12 are provided on opposite sides of the spacer 14.

The spacer(s) 14 are provided on the side of the buffer member 12 remote from the cell 30 in at least the following two cases. a: the spacer(s) 14 are provided on each of adjacent buffer members 12, and the spacer(s) 14 may be opposite to or not aligned with each other. b: one of the adjacent buffer members 12 is provided with the spacer(s) 14, the other one of the adjacent buffer members 12 is not provided with the spacer(s) 14, the spacer(s) 14 are connected to the other buffer member 12, and the spacer(s) 14 and the other buffer member may be spaced apart.

During operation, the immersion liquid is continuously alternatively replaced with the external immersion liquid to carry away the heat from the cells 30, and the immersion liquid left in the passage absorbs the heat from the cells 30, so that the immersion liquid carries away the immersion liquid in the passage during flow, thereby carrying away the heat from the passage.

In the present application, the cells 30 and the buffer assemblies 10 are arranged alternately in sequence, the buffer assembly 10 is provided with the buffer member 12, and the buffer member 12 is connected to the side surface of the cell 30, so as to function as the buffering effect. The spacer(s) 14 are provided between the buffer members 12, and a passage is formed between the buffer members 12. The immersion liquid is contained in the passage so as to fill the space between the cells 30, so that the immersion liquid is distributed more evenly, the heat generated by the cells 30 is adsorbed, and the heat dissipation effect is improved, thereby reducing the temperature of each cell 30.

Therefore, by increasing the heat exchange area between the immersion liquid and the cell 30, each side of the cell 30 can be immersed in the immersion liquid, so that the heat absorption effect of the immersion liquid on the cell 30 can be improved, thereby achieving the effect of equalizing the temperature of the cell 30.

The buffer member 12 may be foam, silica gel, or the like. The spacer 14 may be made of copper or aluminum.

In an alternative example, the buffer assembly 10 has a thickness D of 0.5 mm ≤ D ≤ 5 mm, where D denotes a thickness of the buffer assembly 10 before not being compressed or deformed, and this thickness may also be indirectly substituted for the thickness between the cells 30. A value of the thickness D may be 0.5 mm, 1 mm, 1.5 mm, 2 mm, 3.5 mm, 4 mm, 4.5 mm, 5 mm, etc. Within this range of the thickness of the buffer assembly 10, the buffer member 12 may have a sufficiently large deformation space. In addition, there may also be a space for the spacers 14 to be placed to form the passage for the flow of immersion fluid.

When the thickness of the buffer assembly 10 is less than this range, neither the buffer member 12 nor the spacer(s) 14 can be normally provided to normally form a passage for the flow of the immersion fluid. When the thickness of the buffer assembly 10 is larger than this range, the space occupied by the buffer member 12 and the spacer(s) 14 is excessively large, which occupies the space of the cell 30. So, the energy density of the two-phase immersion liquid-cooled battery pack may be reduced.

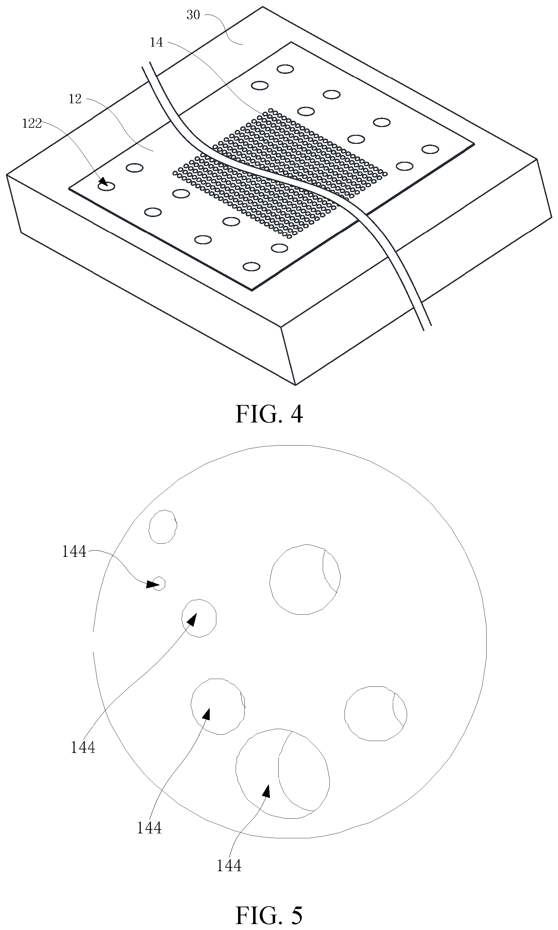

Referring to FIGS. 4 and 5, FIG. 4 is a schematic structural diagram of a cell 30 and a buffer assembly 10 fitted together according to embodiments of the present application, and FIG. 5 is a schematic structural diagram of a spacer 14 of FIG. 4 according to embodiments of the present application.

In an alternative example, the number of spacers 14 is multiple. The multiple spacers 14 are spaced apart from each other to form the passage. The spacers 14 are independent of each other, and adjacent spacers 14 are spaced apart and formed with the passage therebetween, so that the circumference of the spacers 14 is unoccupied. So, there is a relatively large space for forming the passage to increase the space of the passage, thereby leaving more immersion liquid, and enabling the immersion liquid to be sufficiently in contact with the spacers 14 to absorb heat. In addition, the multiple spacers are distributed between the buffer members 12, so that each part of the buffer member 12 as a whole can be better supported to maintain a normal configuration.

The spacer 14 may be cylindrical in shape, with the upper and lower surfaces of the spacer 14 being circular and connected to the buffer member 12, respectively. The cylindrical circumferential surface of the spacer 14 is a curved surface with an arc transition. So, the resistance to the immersion liquid can be reduced when the circumferential surface is in contact with the immersion liquid, so that the flow efficiency of the immersion liquid can be improved.

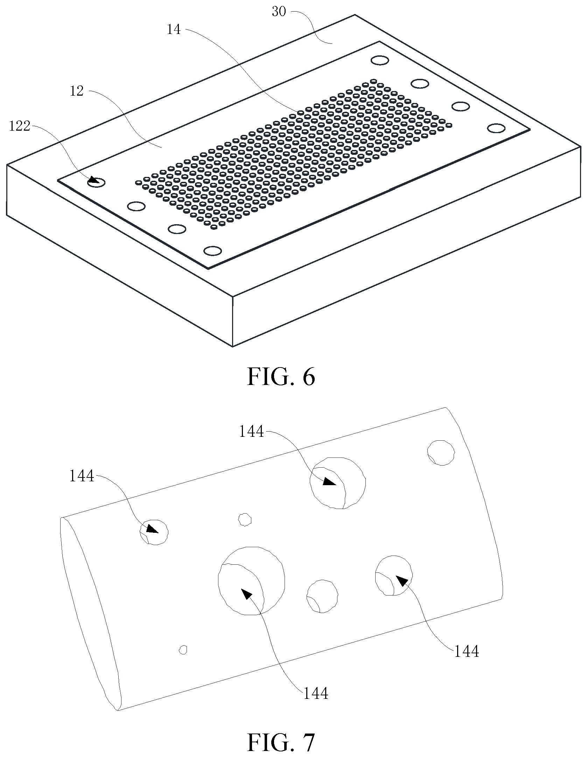

In FIGS. 6 and 7, the spacer 14 may also be hemispherical in shape, with one side of the spacer 14 being planar in contact with the buffer member 12 and the other side of the spacer 14 being spherical in point contact with the buffer member 12. The hemispherical spacer 14 is in contact with the immersion liquid by using a spherical surface of the hemispherical spacer 14 as a peripheral surface, so that resistance to the immersion liquid can be further reduced relative to the cylindrical shape when the hemispherical spacer 14 is in contact with the immersion liquid, thereby improving the flow efficiency of the immersion liquid.

Of course, the spacer 14 may have different shapes, such as a square cylinder, a truncated cone, a cone, a pyramid, and a special-shaped shape, which are not listed herein.

The multiple spacers 14 may be uniformly arranged, i.e., adjacent spacers 14 may have the same or substantially the same distance therebetween, and the distance between adjacent spacers 14 may be denoted by L, and satisfies 50 microns (µm) ≤ L ≤ 200 microns. The distance L may be 50 mm, 60 mm, 70 mm, 80 mm, 90 mm, 100 mm, 110 mm, 120 mm, 130 mm, 140 mm, 150 mm, 160 mm, 170 mm, 180 mm, 190 mm, 200 mm, etc. The distance between the spacers 14 is within this range, and the spacers 14 can provide good support for the buffer member 12. In addition, there is also sufficient space to form the passage for the flow of the immersion fluid.

When the distance between the spacers 14 is less than this range, the passage formed between the spacers 14 are too small to normally allow the flow of the immersion liquid. When the distance between the spacers 14 is greater than this range, the spacers 14 are insufficient to provide better support for the buffer member 12.

The arrangement density of the plurality of spacers 14 can also be changed according to the amount of the deformation of the cell 30. For example, the number of the spacers 14 can be added in a portion, in which the deformation of the cell 30 is relatively large, of the cell 30; and the number of the spacers 14 can be reduced in a portion, in which the deformation of the cell 30 is relatively small, of the cell 30.

Specifically, in a direction from a center of the side of the cell 30 to an edge of the side of the cell 30, the number of spacers 14 per unit area gradually decreases. It is generally understood that the arrangement of the spacers 14 on the side of the cell 30 is gradually sparse from the center of the side of the cell 30 towards the edge of the cell 30, whereby the spacers 14 have the strongest support to the center of the cell 30 and the weakest support to the edge of the cell 30.

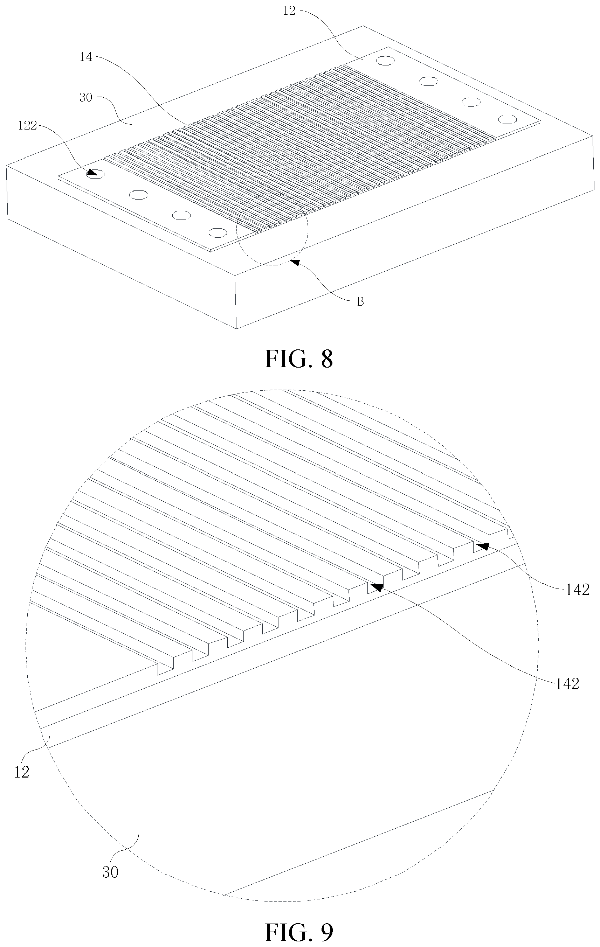

Referring to FIGS. 8 and 9, FIG. 8 is a schematic cross-sectional view of a cell 30 and a buffer assembly 10 fitted together according to embodiments of the present application, and FIG. 9 is a partially enlarged schematic view of a region B in FIG. 8 according to embodiments of the present application.

The spacer 14 is provided with a plurality of through-grooves 142 spaced apart and parallel to each other. The plurality of through-grooves 142 spaced apart and parallel to each other are formed, for example, on the copper block by etching. The through-grooves 142 may extend in a lengthwise direction or a widthwise direction, and the through-grooves 142 extend through opposite ends of the spacer 14. The plurality of through-grooves 142 constitute passages for allowing the flow of the immersion liquid.

In the present embodiment, the spacer 14 is integral, and the through-grooves 142 are provided on the spacer 14 to ensure the stability of the through-grooves 142 at a distance from each other, thereby ensuring the stable flow of the immersion liquid.

With continued reference to FIGS. 5 and 7, the spacer 14 is provided with micropores 144. The micropores 144 are in the state of passing through the spacer 14. The micropores 144 enable the immersion liquid to pass through. The micropores 144 are arranged to change a droplet size of the immersion liquid by tension. The droplet size is reduced, which causes a boiling temperature of the immersion liquid to be reduced. That is, the phase transition temperature from the liquid phase to the gas phase is reduced. The phase transition temperature of the immersion liquid is achieved at a lower temperature, so that the heat dissipation effect of the immersion liquid is improved. Taking the fluorinated liquid as the immersion liquid as an example, in the process of changing the droplet size from 110µm to 50µm, the phase transition temperature of the fluorinated liquid can be reduced from 78°C to 68°C. The phase transition process can result in a change in state, thereby absorbing a large amount of heat. The liquid droplet from the liquid phase to the gas phase can absorb the heat generated by the battery using the principle that is latent heat of phase transition, thereby reducing the temperature of the battery.

Specifically, the diameter of the micropore 144 is denoted by R, and satisfies 200 nanometer (nm) ≤ R ≤ 500 nm. The diameter R may be 200 nm, 220 nm, 250 nm, 280 nm, 300 nm, 310 nm, 330 nm, 350 nm, 380 nm, 390 nm, 400 nm, 410 nm, 430 nm, 440 nm, 450 nm, 480 nm, or 500 nm. Within this range, the micropores 144 do not destroy the overall strength of the spacer 14 and can effectively change the droplet size of the immersion liquid. When the diameters of the micropores 144 are larger than this range, the strength of the spacer 14 is greatly reduced, and a fracture occurs when the spacer 14 is pressed. When the diameters of the micropores 144 are less than this range, the micropores 144 cannot effectively change the droplet size of the immersion liquid.

The micropores 144 have diameters with at least five sizes denoted by R, 0.414R, 0.225R, 0.177R, 0.116R in order. The micropore 144 having a diameter of R is a first large micropore 144, the micropore 144 having a diameter of 0.414R is a second large micropore 144, the micropore 144 having a diameter of 0.225R is a third large micropore 144, the micropore 144 having a diameter of 0.177R is a fourth large micropore 144, and the micropore 144 having a diameter of 0.116R is a fifth large micropore 144. By distributing the micropores 144 with the five sizes, it is possible to arrange as many of the micropores 144 on the spacer 14 as possible without breaking the strength of the spacer 14, so as to maximize the contact area between the immersion liquid and the spacer 14, thereby better changing the droplet size of the immersion liquid.

In an alternative example, the buffer member 12 is provided with multiple through-holes 122 extended in a thickness direction thereof. The through-holes 122 may or may not be uniformly arranged. The immersion liquid may be directly in contact with the side of the cell 30 through the through-holes 122, thereby improving the heat exchange efficiency.

In an alternative example, the case 20 has oppositely disposed first and second end portions 21, 23. The first end portion 21 is provided with a first liquid inlet 25, and the second end portion 23 is provided with a first liquid outlet 27. When the immersion liquid is injected into the cavity of the case 20 through the first liquid inlet 25, the immersion liquid is in a relatively low temperature state. As the immersion liquid flows in the cavity, the temperature of the immersion liquid gradually increases due to the direct contact between the immersion liquid and the cell 30, and then is discharged from the first liquid outlet 27. In the present example, the immersion liquid in the case 20 flows, so that the heat can be carried away more efficiently and the heat dissipation effect can be improved.

A liquid cooling plate 40 adjoins the case 20 and in indirect contact with the cell 30. The liquid cooling plate 40 may be located at any one of the sides, the top portion and the bottom portion of the case 20. The liquid cooling plate 40 shown in the drawings is located at the bottom portion of the case 20. The liquid cooling plate 40 contains cooling liquid, which flows inside the liquid cooling plate 40 and can absorb and carry away heat transferred from the cell 30 to the liquid cooling plate 40. The liquid cooling plate 40 also has oppositely disposed third and fourth end portions 41, 43. The third end portion 41 is provided with a second liquid outlet 47, and the fourth end portion 43 is provided with a second liquid inlet 45. The cooling liquid enters the liquid cooling plate 40 through the second liquid inlet 45, and is in a relatively low temperature state when the cooling liquid enters the liquid cooling plate 40. As the cooling liquid flows in the liquid cooling plate 40, since the cooling liquid absorbs the heat transferred from the cell 30 to the liquid cooling plate 40, the temperature of the cooling liquid is gradually increased, and then discharged from the second liquid outlet 47.

The first end portion 21 adjoins the third end portion 41, and the second end portion 23 adjoins the fourth end portion 43. Thus, the first liquid inlet 25 for the immersion liquid and the second liquid outlet 47 for the cooling liquid are relatively close, and the first liquid outlet 27 for the immersion liquid and the second liquid inlet 45 for the cooling liquid are also relatively close. It will be appreciated that although the temperature of the immersion liquid is relatively high at the first liquid outlet 27 of the second end portion 23, which is not conducive to heat dissipation in the vicinity of the second end portion 23 of the case 20, the cooling liquid having a relatively low temperature is injected into the second liquid inlet 45 adjacent to the first liquid outlet 27, and the cooling liquid having a relatively low temperature can effectively assist in heat dissipation and cooling in the vicinity of the second end portion 23.

Similarly, although the temperature of the cooling liquid at the second liquid outlet 47 of the third end portion 41 is relatively high, which is not conducive to enable the third end portion 41 of the liquid cooling plate 40 to absorb the heat from the first end portion 21 of the case 20 adjacent to the third end portion 41, the immersion liquid having a relatively low temperature is injected into the first liquid inlet 25 adjacent to the second liquid outlet 47, and the immersion liquid having the relatively low temperature can effectively assist in heat dissipation and cooling in the vicinity of the first end portion 21. Therefore, with respect to the cells 30 in the case 20, at both the first end portion 21 and the second end portion 23 of the case 20, there is always a cooling medium having a lower temperature to effectively help the cells 30 cool down.

According to the present embodiment, by elaborately arranging the relative positions of the first liquid inlet 25 and the first liquid outlet 27 for the immersion liquid, as well as the second inlet 45 and the second outlet 47 for the cooling liquid, the immersion liquid and the cooling liquid for the battery pack 10 are acted together, so that the cell 30 can be sufficiently cooled in different areas thereof. In this way, it can ensure that the heat generated by the cell 30 is more uniformly and more effectively dispersed, the temperature difference of the surface of the cell 30 is reduced, and the local accumulation of the heat from the surface of the cell 30 is avoided, so that the temperature distribution of the cell 30 is entirely more uniform, thereby reducing the risk that the performance of the cell 30 decreases and the service life of the cell 30 decreases due to the temperature difference.

## Claims

1. A two-phase immersion liquid-cooled battery pack comprising:
a case provided with a cavity, wherein the cavity is configured to be filled with immersion liquid;
a plurality of cells spaced apart in the cavity; and
a plurality of buffer assemblies disposed among the cells, wherein each of the buffer assemblies comprises a buffer member and one or more spacers, the buffer member is connected to a side of a corresponding one of the plurality of cells, the one or more spacers are disposed on a side of the buffer member remote from the cell to form a passage between the buffer member and another buffer member, and the passage is configured to contain the immersion liquid.

2. The two-phase immersion liquid-cooled battery pack according to claim 1, wherein the buffer assembly has a thickness D satisfying 0.5 mm≤D≤5 mm.

3. The two-phase immersion liquid-cooled battery pack according to claim 2, wherein 2 mm≤D≤4 mm.

4. The two-phase immersion liquid-cooled battery pack according to claim 1, wherein the one or more spacers comprises a plurality of spacers, and the plurality of the spacers are spaced apart from each other to form the passage.

5. The two-phase immersion liquid-cooled battery pack according to claim 4, wherein a shape of the spacer is at least one of a cylindrical shape, a hemispherical shape, a square cylinder, a truncated cone, a cone, and a pyramid shape.

6. The two-phase immersion liquid-cooled battery pack according to claim 4, wherein the plurality of spacers are uniformly arranged, and a distance between adjacent two of the plurality of spacers is denoted by L, and satisfies 50 µm≤L≤200 µm.

7. The two-phase immersion liquid-cooled battery pack according to claim 6, wherein 100µm≤L≤150µm.

8. The two-phase immersion liquid-cooled battery pack according to claim 4, wherein the number of ones of the plurality of spacers per unit area is gradually decreased in a direction from a center of a side of the cell to an edge of the side of the cell.

9. The two-phase immersion liquid-cooled battery pack according to claim 1, wherein the spacer is provided with a plurality of through-grooves spaced apart from and parallel to each other.

10. The two-phase immersion liquid-cooled battery pack according to claim 9, wherein the plurality of through-grooves penetrate through opposite two ends of the spacer in a lengthwise direction or a widthwise direction of the spacer.

11. The two-phase immersion liquid-cooled battery pack according to any one of claims 1 to 10, wherein the spacer is provided with micropores.

12. The two-phase immersion liquid-cooled battery pack according to claim 11, wherein the micropores each have a diameter that is denoted by R and satisfies 200 nm≤R≤500 nm.

13. The two-phase immersion liquid-cooled battery pack according to claim 12, wherein 300nm≤R≤400 nm.

14. The two-phase immersion liquid-cooled battery pack according to claim 11, wherein the micropores have diameters with at least five sizes that are R, 0.414R, 0.225R, 0.177R, and 0.116R in order.

15. The two-phase immersion liquid-cooled battery pack according to any one of claims 1 to 10, wherein the buffer member is provided with a plurality of through-holes in a thickness direction of the buffer member.

16. The two-phase immersion liquid-cooled battery pack according to any one of claims 1 to 10, wherein the buffer member is made of one of foam and silica gel.

17. The two-phase immersion liquid-cooled battery pack according to any one of claims 1 to 10, wherein the spacer is one of aluminum and copper.

18. The two-phase immersion liquid-cooled battery pack according to any one of claims 1 to 10, wherein the case comprises a first end portion and a second end portion oppositely disposed, the first end portion is provided with a first liquid inlet, and the second end portion is provided with a first liquid outlet;
the two-phase immersion liquid-cooled battery pack further comprises a liquid cooling plate, wherein the liquid cooling plate adjoins the case, an interior of the liquid cooling plate is configured to contain cooling liquid, the liquid cooling plate comprises a third end portion and a fourth end portion oppositely disposed, the third end portion is provided with a second liquid outlet, and the fourth end portion is provided with a second liquid inlet;
wherein the first end portion adjoins the third end portion, and the second end portion adjoins the fourth end portion.

19. The two-phase immersion liquid-cooled battery pack according to any one of claims 1 to 10, wherein the buffer member and the another buffer member that are adjacent to each other are each provided with the one or more spacers, and the one or more spacers on the buffer member are opposite to or not aligned with the one or more spacers on the another buffer member.

20. The two-phase immersion liquid-cooled battery pack according to any one of claims 1 to 10, wherein one of the buffer member and the another buffer member that are adjacent to each other is provided with the one or more spacers connected to an other one of the buffer member and the another buffer member that are adjacent to each other.
